# EUROPÄISCHE PATENTANMELDUNG

(11) **EP 3 843 230 A1**
(43) Veröffentlichungstag der Anmeldung: **30.06.2021**
(21) Anmeldenummer: 20215866.3
(22) Anmeldetag: 21.12.2020
(51) Int. Cl.: H02J 3/26, B60L 53/60

(54) **LADEINFRASTRUKTURANORDNUNG ZUM LADEN VON ELEKTROFAHRZEUGEN UND BETRIEBSVERFAHREN HIERFÜR**

(30) Priorität: 23.12.2019 DE 102019135654
(71) Anmelder: Compleo Charging Solutions AG, 44309 Dortmund (DE)
(72) Erfinder: Kachouh, Checrallah, 44227 Dortmund (DE); Turki, Faical, 59174 Kamen (DE)
(74) Vertreter: Wickord, Wiro

(57) **Zusammenfassung**

Die Erfindung betrifft eine Ladeinfrastrukturanordnung zum Laden von Elektrofahrzeugen umfassend einen Anschlusspunkt (6), der eingerichtet ist zum Anschluss der Ladeinfrastrukturanordnung an ein externes Versorgungsnetz (8), umfassend ein zu dem Anschlusspunkt (6) geführtes Drehstrom-Zuleitungssystem (7) mit drei Phasenleitern und einem Nullleiter, umfassend wenigstens einen AC-Ladepunkt (1-4), der an wenigstens einen Phasenleiter des Drehstrom-Zuleitungssystems (7) und den Nullleiter angeschlossen ist, und umfassend eine Schieflastausgleichseinheit (5), die über Anschlussleiter an die Phasenleiter und den Nullleiter des Drehstrom-Zuleitungssystems (7) angeschlossen ist, wobei für den Anschlusspunkt (6) eine maximale Stromtragfähigkeit und/oder eine maximale Schieflast vorgegeben sind und wobei die Schieflastausgleichseinheit eingerichtet ist zum Entgegennehmen einer Information eine kumulierte Belastung jedes Phasenleiters des Drehstrom-Zuleitungssystems (7) durch die AC-Ladepunkte (1-4) und/oder eine lokale Belastung des Drehstrom-Zuleitungssystems (7) durch einen Ladestrom jedes AC-Ladepunkts (1-4) und zum Einprägen eines Ausgleichsstroms zwischen den Phasenleitern des Drehstrom-Zuleitungssystems (7) derart, dass in dem Anschlusspunkt (6) die maximale Schieflast und/oder die maximale Stromtragfähigkeit nicht überschritten sind. Ferner betrifft die Erfindung eine Schieflastausgleichseinheit (5) für eine Ladeinfrastrukturanordnung sowie ein Betriebsverfahren hierfür.

## Beschreibung

Die Erfindung betrifft eine Ladeinfrastrukturanordnung zum Laden von Elektrofahrzeugen mit wenigstens einem AC-Ladepunkt, welcher über ein Drehstrom-Zuleitungssystem mit drei Phasenleitern und einem Nullleiter an einen Anschlusspunkt angeschlossen ist, der eingerichtet ist zum Anschluss der Ladeinfrastrukturanordnung an ein externes Versorgungsnetz. Ferner betrifft die Erfindung ein Betriebsverfahren für eine Ladeinfrastrukturanordnung zum Laden von Elektrofahrzeugen.

Zum Laden von Elektrofahrzeugen werden in der Praxis vergleichsweise hohe Ladeströme bereitgestellt. Die hohen Ladeströme beziehungsweise die damit verbundenen Leistungen können ein Versorgungsnetz erheblich belasten. Dies gilt insbesondere, wenn eine Mehrzahl von Ladepunkten in einem Anschlusspunkt gemeinsam an das Versorgungsnetz angeschlossen ist und die Ladepunkte zugleich zum Laden von Elektrofahrzeugen genutzt wird.

Viele Netzbetreiber spezifizieren zur Vermeidung einer zu hohen Belastung des Versorgungsnetzes Grenzwerte für die Versorgungsnetzbelastung. Dies erfolgt beispielsweise in Bezug auf die maximale Stromtragfähigkeit, das heißt den zum Betrieb der Ladeinfrastrukturanordnung dem Versorgungsnetz maximal entnommenen Strom, sowie eine Schieflast. Die Schieflast versteht sich dabei als die durch vektorielle Addition gebildete Summe aller Belastungen der Phasenleiter im Anschlusspunkt bezogen auf die Ströme beziehungsweise die Leistungen. Beispielsweise ist die Schieflast null, wenn die Belastung symmetrisch ist und die Strom- beziehungsweise Leistungsamplitude für alle Phasen gleich groß ist.

Um die Vorgaben in Bezug auf die maximale Stromtragfähigkeit sowie die maximale Schieflast gewährleisten zu können, werden verschiedene Ladepunkte innerhalb einer Ladeinfrastrukturanordnung üblicherweise an unterschiedliche Phasenleiter des Drehstrom-Zuleitungssystems angeschlossen. Hierdurch kann erreicht werden, dass die Last beim Laden der Fahrzeuge möglichst auf verschiedene Phasenleiter verteilt wird und nicht ein Phasenleiter über Gebühr belastet ist. Weiter können je nach aktueller Lastsituation einzelne Ladepunkte abgeschaltet werden, wenn der ihnen zugeordnete Phasenleiter zu hoch belastet ist.

Ebenfalls ist bekannt, dass zur Einhaltung der Vorgaben in Bezug auf die maximale Stromtragfähigkeit einzelne Fahrzeuge mit einem geringeren als den technisch möglichen Ladestrom geladen werden. Beispielsweise kann der Ladestrom für die zuletzt hinzugekommenen Elektrofahrzeuge reduziert werden, um den Grenzwert in Bezug auf die Stromtragfähigkeit einzuhalten, oder es ist vorgesehen, dass der Ladestrom für mehrere oder alle Fahrzeuge anteilig reduziert wird. Ferner kann ungeachtet der Grenzwerte für die maximale Stromtragfähigkeit der Ladestrom für einzelne oder alle Elektrofahrzeuge reduziert werden, wenn beispielsweise durch das Beenden eines Ladevorgangs die Belastung in einem Phasenleiter reduziert wird und dadurch die Schieflast im Anschlusspunkt der Ladeinfrastrukturanordnung unzulässig ansteigt.

Aufgabe der vorliegenden Erfindung ist es, eine verbesserte Ladeinfrastrukturanordnung sowie ein Betriebsverfahren hierfür anzugeben, welche den vorbezeichneten Problemen entgegenwirken.

Zur Lösung der Aufgabe weist die Erfindung die Merkmale des Patentanspruchs 1 auf. Demzufolge umfasst die Ladeinfrastrukturanordnung zum Laden von Elektrofahrzeugen einen Anschlusspunkt, der eingerichtet ist zum Anschluss der Ladeinfrastrukturanordnung an ein externes Versorgungsnetz, ein zu dem Anschlusspunkt geführtes Drehstrom-Zuleitungssystem mit drei Phasenleitern und einem Nullleiter, wenigstens einen AC-Ladepunkt, der an wenigstens oder genau einen Phasenleiter des Drehstrom-Zuleitungssystems und den Nullleiter angeschlossen ist, sowie eine Schieflastausgleichseinheit, die über Anschlussleiter an das Drehstrom-Zuleitungssystem angeschlossen ist. Dabei sind für den Anschlusspunkt eine maximale Stromtragfähigkeit und/oder eine maximale Schieflast vorgegeben. Die Schieflastausgleichseinheit ist eingerichtet zum Entgegennehmen einer Information über eine kumulierte Belastung jedes Phasenleiters des Drehstrom-Zuleitungssystems durch die Summe der AC-Ladepunkte und/oder eine lokale Belastung des Drehstrom-Zuleitungssystems durch jeden einzelnen AC-Ladepunkt und zum Einprägen eines Ausgleichsstroms zwischen den Phasenleitern des Drehstrom-Zuleitungssystems derart, dass in dem Anschlusspunkt die Grenzwerte für die maximale Schieflast und/oder die maximale Stromtragfähigkeit nicht überschritten sind.

Die lokale und/oder kumulierte Belastung des Drehstrom-Zuleitungssystems durch die AC-Ladepunkte kann beispielsweise ermittelt werden über den Laststrom, welcher den Wirkstrom und den Blindstrom umfasst. Beispielsweise kann die lokale und/oder kumulierte Belastung über die Scheinleistung bestimmt werden. Die Scheinleistung umfasst die Wirkleistung und die Blindleistung.

Der besondere Vorteil der Erfindung besteht darin, dass durch das Vorsehen der Schieflastausgleichseinheit innerhalb der Ladeinfrastrukturanordnung die Belastung der Phasenleiter des Drehstrom-Zuleitungssystems ausgeglichen werden können mit der Folge, dass Spitzenlasten vermieden beziehungsweise so verteilt werden können, dass eine tatsächliche Schieflast im Anschlusspunkt der Ladeinfrastrukturanordnung geringer ist als die noch zulässige maximale Schieflast, die exemplarisch für verschiedene Netzbetreiber in Deutschland 20 A beziehungsweise 4,6 kVA beträgt. Hierzu wird den am wenigsten belasteten Phasen beziehungsweise Phasenleitern des Drehstrom-Zuleitungssystems Energie entnommen, um diese auf die höher belasteten Phasen beziehungsweise Phasenleiter zu verteilen. Im optimalen symmetrischen Fall sind alle Phasenleiter gleich belastet, das heißt die Lastströme in allen Phasenleitern sind gleich.

Nach einer bevorzugten Ausführungsform der Erfindung sieht die Schieflastausgleichseinheit eine Steuerung und eine Leistungselektronik mit einer Brückenschaltung vor. Die Brückenschaltung umfasst einen Brückenzweig je Phasenleiter beziehungsweise je Anschlussleiter, der einem Phasenleiter des Drehstrom-Zuleitungssystems zugeordnet ist, sowie einen Zwischenkreis mit einer Zwischenkreiskapazität, die eine Mehrzahl von Kondensatoren umfassen kann.

Eine sehr kostengünstige Realisierung der Brückenschaltung ergibt sich, wenn der Nullleiter beziehungsweise ein dem Nullleiter des Drehstrom-Zuleitungssystems zugeordneter Anschlussleiter der Schieflastausgleichseinheit an einen Mittelpunkt der Zwischenkreiskapazität angeschlossen ist.

Nach einer alternativen Ausführungsform der Erfindung kann die Brückenschaltung einen weiteren Brückenzweig für den dem Nullleiter des Drehstrom-Zuleitungssystems zugeordneten Anschlussleiter vorsehen. Der Nullleiter wird dabei getaktet betrieben, damit der Strom darin geregelt werden kann. Vorteilhaft ist die Belastung für die Zwischenkreiskapazität hierbei gering, da er nur die Kommutierungsenergie liefern muss.

Nach einer Weiterbildung der Erfindung sieht die Ladeinfrastrukturanordnung Messmittel vor zum Bestimmen der Belastung (Lastströme und/oder Scheinleistung) der verschiedenen Phasenleiter des Drehstrom-Zuleitungssystems. Bevorzugt sind die Messmittel zwischen dem wenigstens einen AC-Ladepunkt oder der Mehrzahl von AC-Ladepunkten einerseits und der Schieflastausgleichseinheit andererseits angeordnet. Vorteilhaft kann durch das Vorsehen der Messmittel die Belastung der Phasenleiter ermittelt und zum geregelten beziehungsweise gesteuerten Betrieb der Schieflastausgleichseinheit verwendet werden. Insbesondere kann vorgesehen sein, dass die Lastströme in jedem Phasenleiter durch ein einzelnes Messmittel individuell bestimmt werden.

Nach einer Weiterbildung der Erfindung ist von jedem AC-Ladepunkt eine Information zu der dortigen lokalen Belastung durch den Ladestrom, der an diesem AC-Ladepunkt bereitgestellt wird, an die Schieflastausgleichseinheit übertragbar. Vorteilhaft kann durch die Übertragung der Information zum Ladestrom optional auf das Vorsehen der Messmittel im Drehstrom-Zuleitungssystem verzichtet werden. Aus der Information über die verschiedenen lokalen Belastungen, die an den AC-Ladepunkten bereitgestellt werden, und dem Wissen über die Phasenleiter des Drehstrom-Zuleitungssystems, an die die AC-Ladepunkt angeschlossen sind, wird dann die (Schief-) Last im Drehstrom-Zuleitungssystem vor der Symmetrierung bestimmt.

Nach einer Weiterbildung der Erfindung kann die Information über die lokale Belastung des Drehstrom-Zuleitungssystems durch die einzelnen AC-Ladepunkte und/oder die kumulierte Belastung kabellos und/oder leitungsgebunden an die Schieflastausgleichseinheit bereitgestellt werden. Die Schieflastausgleichseinheit kann geregelt oder gesteuert betrieben werden.

Beispielsweise können weitere Wechselstromlasten zusätzlich zu dem wenigstens einen AC-Ladepunkt an das Drehstrom-Zuleitungssystem der Ladeinfrastrukturanordnung angeschlossen sein. Beispielsweise können Produktionsmittel eines Fertigungsbetriebs als weitere Wechselstromlast an das Drehstrom-Zuleitungssystem angeschlossen sein. Die Schieflastsymmetrierungseinheit der erfindungsgemäßen Ladeinfrastrukturanordnung kann dann ebenfalls dazu dienen, eventuelle Schieflasten, welche auf die weiteren Wechselstromlasten zurückgehen, so auszugleichen, dass die maximale Schieflast im Anschlusspunkt nicht überschritten ist.

Zur Lösung der Aufgabe weist die Erfindung die Merkmale des Patentanspruchs 8 auf. Demzufolge umfasst eine Schieflastausgleichseinheit für eine Ladeinfrastrukturanordnung mit einer Mehrzahl von Phasenleitern und einem Nullleiter Mittel zum Entgegennehmen einer Information über eine kumulierte Belastung jedes Phasenleiters und/oder einer lokalen Belastung des Drehstrom-Zuleitungssystems durch einen Ladestrom, der an einem AC-Ladepunkt der Ladeinfrastrukturanordnung bereitgestellt ist. Weiter umfasst die Schieflastausgleichseinheit zum Anschluss an die Phasenleitern und den Nullleiter der Ladeinfrastrukturanordnung ausgebildete Anschlussleiter sowie eine Steuerung und eine Leistungselektronik. Die Leistungselektronik sieht eine Brückenschaltung vor, wobei die Brückenschaltung einen Brückenzweig je Phasenleiter beziehungsweise zu den Phasenleitern geführten Anschlussleiter und einen Zwischenkreis mit einer Zwischenkreiskapazität vorsieht. Die Zwischenkreiskapazität kann eine Mehrzahl von Kondensatoren umfassen. Die Leistungselektronik ist im Zusammenwirken mit der Steuerung eingerichtet zum Aufbringen eines Ausgleichsstroms zwischen den Anschlussleitern beziehungsweise Phasenleitern.

Ein dem Nullleiter zugeordneter Phasenleiter kann beispielsweise an einen Mittelpunkt der Zwischenkreiskapazität angeschlossen sein. Beispielsweise kann die Brückenschaltung einen weiteren Brückenzweig für den dem Nullleiter zugeordneten Anschlussleiter der Schieflastausgleichseinheit aufweisen.

Zur Lösung der Aufgabe weist die Erfindung die Merkmale des Patentanspruchs 11 auf. Demzufolge umfasst ein Betriebsverfahren für eine Ladeinfrastrukturanordnung zum Laden von Elektrofahrzeugen die folgenden Schritte: Die Schieflastausgleichseinheit nimmt eine Information über eine kumulierte Belastung jedes Phasenleiter des Drehstrom-Zuleitungssystems durch alle AC-Ladepunkte und/oder eine lokale Belastung des Drehstrom-Zuleitungssystems durch jeden AC-Ladepunkt entgegen, die Schieflastausgleichseinheit bestimmt eine aus der kumulierten Belastung jedes Phasenleiter des Drehstrom-Zuleitungssystems und/oder aus der lokalen Belastung des Drehstrom-Zuleitungssystems durch jeden AC-Ladepunkt resultierende Schieflast und die Schieflastausgleichseinheit prägt dann zwischen den Phasenleitern eines Drehstrom-Zuleitungssystems der Ladeinfrastrukturanordnung einen Ausgleichsstrom ein, der so bemessen ist, dass eine tatsächliche Schieflast zwischen den Phasenleitern im Anschlusspunkt der Ladeinfrastrukturanordnung kleiner ist als eine für den Anschlusspunkt definierte maximale Schieflast und/oder dass eine maximale Stromtragfähigkeit gewahrt ist.

Nach einer bevorzugten Weiterbildung der Erfindung ist vorgesehen, dass die tatsächliche Schieflast im Anschlusspunkt im Wesentlichen vollständig ausgeglichen wird und zu Null wird.

Der besondere Vorteil der Erfindung besteht darin, dass durch das erfindungsgemäße Betriebsverfahren die Phasen des Drehstrom-Zuleitungssystems gleichmäßiger belastet werden und im Ergebnis eine Reduzierung der Schieflast erreicht wird beziehungsweise ein Grenzwert für die maximale Stromtragfähigkeit eingehalten wird. Eine Vielzahl von Fahrzeugen, die an die Ladeinfrastrukturanordnung angeschlossen sind, können dann schneller und/oder mit hohen Ladeströmen geladen werden, ohne dass ein externes Versorgungsnetz unzulässig hoch belastet wird.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Ladeinfrastrukturanordnung und/oder der Schieflastausgleichseinheit gelten selbstverständlich auch im Zusammenhang mit dem erfindungsgemäßen Betriebsverfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Es zeigen:
- Fig. 1: eine Prinzipdarstellung einer erfindungsgemäßen Ladeinfrastrukturanordnung mit vier an ein Drehstrom-Zuleitungssystem angeschlossenen Ladepunkten und einer Schieflastausgleichseinheit,
- Fig. 2: eine grafische Darstellung von Lastströmen im Drehstrom-Zuleitungssystem vor einer Symmetrierung,
- Fig. 3: die Lastströme im Drehstrom-Zuleitungssystem nach der Symmetrierung,
- Fig. 4: eine grafische Darstellung von Ausgleichsströmen, welche von der Schieflastausgleichseinheit aufgeprägt werden,
- Fig. 5: eine grafische Darstellung von eingespeisten Leistungen der Schieflastausgleichseinheit,
- Fig. 6: eine erste Variante einer Brückenschaltung der Leistungselektronik der Schieflastausgleichseinheit,
- Fig. 7: eine zweite Variante der Brückenschaltung der Leistungselektronik der Schieflastausgleichseinheit und
- Fig. 8: eine dritte Variante der Brückenschaltung der Leistungselektronik der Schieflastausgleichseinheit.

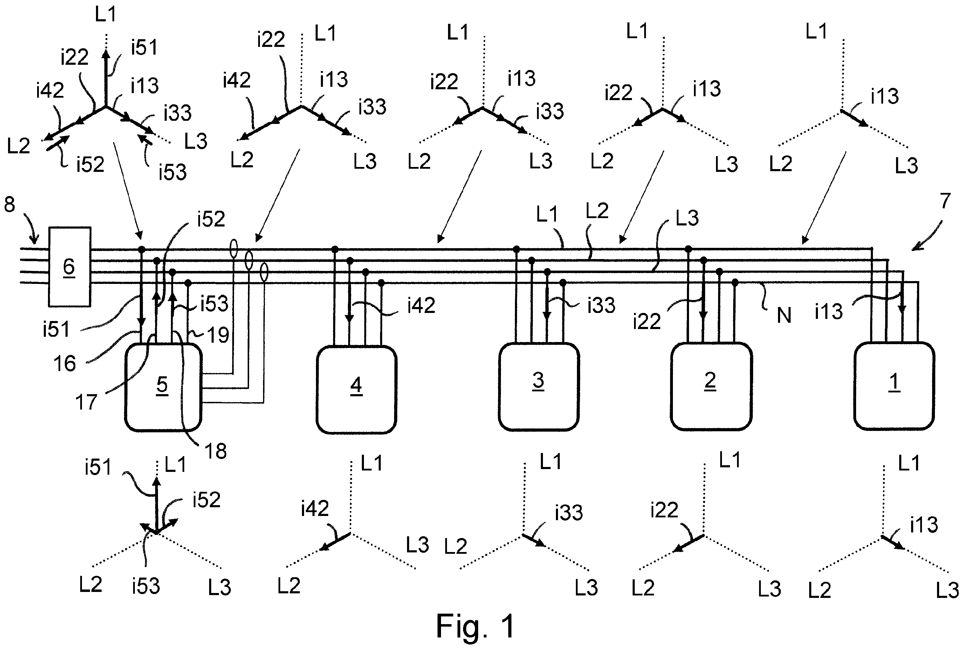

Eine erfindungsgemäße Ladeinfrastrukturanordnung nach Fig. 1 umfasst exemplarisch vier AC-Ladepunkte 1, 2, 3, 4, die an ein Drehstrom-Zuleitungssystem 7 der Ladeinfrastrukturanordnung angeschlossen sind. Das Drehstrom-Zuleitungssystem 7 ist zu einem Anschlusspunkt 6 geführt. Der Anschlusspunkt 6 dient dem Anschluss der Ladeinfrastrukturanordnung an ein externes Versorgungsnetz 8. Das Drehstrom-Zuleitungssystem 7 sieht jedenfalls einen ersten Phasenleiter L1, einen zweiten Phasenleiter L2, einen dritten Phasenleiter L3 sowie einen Nullleiter N vor.

Die Ladeinfrastrukturanordnung umfasst darüber hinaus eine Schieflastausgleichseinheit 5, welche über vier Anschlussleiter 16, 17, 18, 19 an die Phasenleiter L1, L2, L3 und dem Nullleiter N des Drehstrom-Zuleitungssystems 7 angeschlossen ist. Die Schieflastausgleichseinheit 5 umfasst eine Steuerung sowie eine Leistungselektronik mit einer Brückenschaltung 20.

Im dargestellten Ausführungsbeispiel der Erfindung wird die Belastung im Drehstrom-Zuleitungssystem 7 in kumulierter Form über die Lastströme bestimmt. Die Ladeinfrastrukturanordnung sieht Messmittel 9 vor zum Bestimmen der Lastströme in den Phasenleitern L1, L2, L3 vor. Die Messmittel 9 sind so zwischen den AC-Ladepunkten 1, 2, 3, 4 einerseits und der Schieflastausgleichseinheit 5 andererseits angeordnet, dass die Lastströme in den Phasenleitern L1, L2, L3 als Summe der von den AC-Ladepunkten 1, 2, 3, 4 bereitgestellten Ladeströme i13, i22, i33, i42 getrennt für die Phasenleiter L1, L2, L3 bestimmt werden können. Die Schieflastausgleichseinheit 5 nimmt die Messwerte für die Lastströme der Phasenleiter L1, L2, L3 entgegen. Im Zusammenwirken mit der Steuerung ist die Leistungselektronik 20 der Schieflastausgleichseinheit 5 eingerichtet zum Einprägen von Ausgleichsstrom i51, i52, i53 zwischen den Phasenleitern L1, L2, L3 und dem Nullleiter N des Drehstrom-Zuleitungssystems 7.

In einem in der Fig. 1 dargestellten Betriebsfall sei angenommen, dass ein Ladestrom i13 an einem ersten AC-Ladepunkt 1 der Ladeinfrastrukturanordnung bereitgestellt wird. Der erste AC-Ladepunkt 1 sei dabei mit einem dritten Phasenleiter L3 des Drehstrom-Zuleitungssystems 7 gekoppelt mit der Folge, dass der erste Ladestrom i13 den dritten Phasenleiter L3 belastet. An einem zweiten AC-Ladepunkt 2 der Ladeinfrastrukturanordnung wird ein Ladestrom i22 bereitgestellt, der aufgrund der Verkabelung des zweiten AC-Ladepunkts 2 einen zweiten Phasenleiter L2 des Drehstrom-Zuleitungssystems 7 belastet. In analoger Weise sind ein dritter AC-Ladepunkt 3 und ein vierter AC-Ladepunkt 4 so mit dem Drehstrom-Zuleitungssystem 7 verbunden, dass ein dritter Ladestrom i33 ebenfalls den dritten Phasenleiter L3 und ein vierter Ladestrom i42 den zweiten Phasenleiter L2 des Drehstrom-Zuleitungssystems 7 belasten.

Die jeweilige Belastung der AC-Ladepunkte 1, 2, 3, 4 für sich genommen beziehungsweise der Ladestrom i13, i22, i33, i42 je AC-Ladepunkt 1, 2, 3, 4 ist in dem rechtwinkligen Koordinatensystem unter des jeweiligen AC-Ladepunkts 1, 2, 3, 4 nach Phasen getrennt dargestellt. Eine kumulierte Belastung im Drehstrom-Zuleitungssystem 7 zwischen zwei benachbarten AC-Ladepunkten 1, 2, 3, 4 beziehungsweise zwischen dem vierten AC-Ladepunkt 4 und der Schieflastausgleichseinheit 5 ist jeweils oberhalb des ersten Phasenleiters L1 des Drehstrom-Zuleitungssystems 7 dargestellt. Erkennbar ist hierbei auch, dass die Messmittel 9 die kumulierte Belastung durch alle vier AC-Ladepunkte 1, 2, 3, 4 ermitteln und der Schieflastausgleichseinheit 5 zur Verfügung stellen.

Nimmt man zur Erklärung der Funktion des Schieflastausgleichs einmal an, dass über einen ersten AC-Ladepunkt 1 und einen dritten AC-Ladepunkt 3 jeweils ein Ladestrom i13, i33 von 16 A und über einen zweiten AC-Ladepunkt 2 und einen vierten AC-Ladepunkt 3 jeweils ein Ladestrom i22, i42 von 20 A bereitgestellt wird, dass für den Anschlusspunkt 6 eine maximale Schieflast von 20 A zulässig ist und dass die maximale Stromtragfähigkeit im Anschlusspunkt 6 bei 64 A liegt, wird man erkennen, dass allein bei einer Bereitstellung der Ladeströme i13, i22 an den ersten beiden AC-Ladepunkten 1, 2 die maximale Schieflast nicht überschritten ist. Ebenso ist der Grenzwert für die maximale Stromtragfähigkeit eingehalten. Durch die Bereitstellung des dritten Ladestroms i33 an dem dritten AC-Ladepunkt 3 wird nun der dritte Phasenleiter L3 mit insgesamt 32 A belastet. Hier kommt es jetzt zu einer Überschreitung des Grenzwerts für die maximale Schieflast. In analoger Weise wird durch die Bereitstellung des vierten Ladestroms i42 an dem vierten AC-Ladepunkt 4 die maximale Schieflast überschritten. Die maximale Stromtragfähigkeit, welche in Bezug auf den Anschlusspunkt 6 spezifiziert ist, wäre im vorliegenden Beispiel nicht überschritten.

Aufgrund der Verletzung der Grenzwerte für die maximale Schieflast wäre ein Betrieb der Ladeinfrastrukturanordnung ohne die Schieflastausgleichseinheit 5 in dem oben skizzierten Betriebsfall nicht uneingeschränkt möglich. Erst die Schieflastausgleichseinheit 5 sorgt erfindungsgemäß dafür, dass der am geringsten belasteten Phase (Phasenleiter L1) des Drehstrom-Zuleitungssystems 7 Energie entnommen und diese Energie auf die am stärksten belasteten Phasen (Phasenleiter L2, L3) verteilt wird. Die Schieflastausgleichseinheit 5 prägt hierzu Ausgleichsströme i51, i52, i53 zwischen den Phasenleitern L1, L2, L3 und dem Nullleiter N des Drehstrom-Zuleitungssystems 7 derart ein, dass in dem Anschlusspunkt 6 der Ladeinfrastrukturanordnung eine Schieflast dahingehend ausgeglichen ist, dass ein Grenzwert für eine maximale Schieflast und/oder ein Grenzwert für eine maximale Stromtragfähigkeit im Anschlusspunkt 6 nicht überschritten sind. Im Idealfall ist die Schieflast im Anschlusspunkt 6 auf Null ausgeglichen.

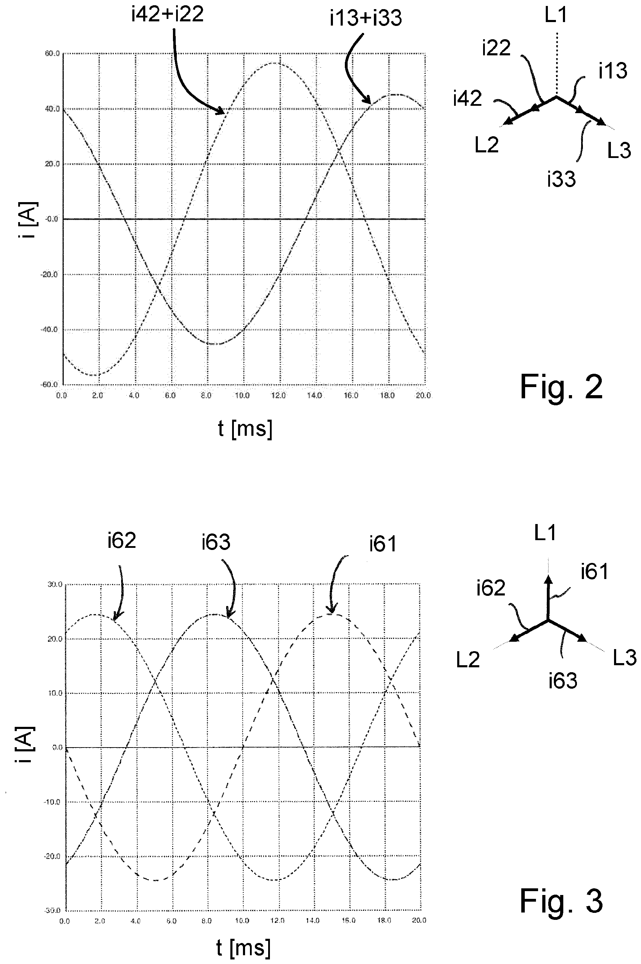

In dem Graph nach Fig. 2 sind die Lastströme der drei Phasenleiter L1, L2, L3 im Drehstrom-Zuleitungssystem 7 für einen Punkt zwischen dem vierten AC-Ladepunkt 4 und der Schieflastausgleichseinheit 5 dargestellt. Die Lastströme entsprechen insofern denen, die mithilfe der Messmittel 9 bestimmt und der Schieflastausgleichseinheit 5 zugeführt werden. Während der erste Phasenleiter L1 im vorliegenden Ausführungsbeispiel unbelastet ist, ergibt sich die Belastung des zweiten Phasenleiters L2 durch die Summe der Ladeströme i42, i22, die an den zweiten AC-Ladepunkt 2 und dem vierten AC-Ladepunkt 4 bereitgestellt werden. In analoger Weise ergibt sich die Belastung des dritten Phasenleiters L3 durch die Summe der Ladeströme i13, i33 des ersten AC-Ladepunkts 1 und des dritten AC-Ladepunkts 3.

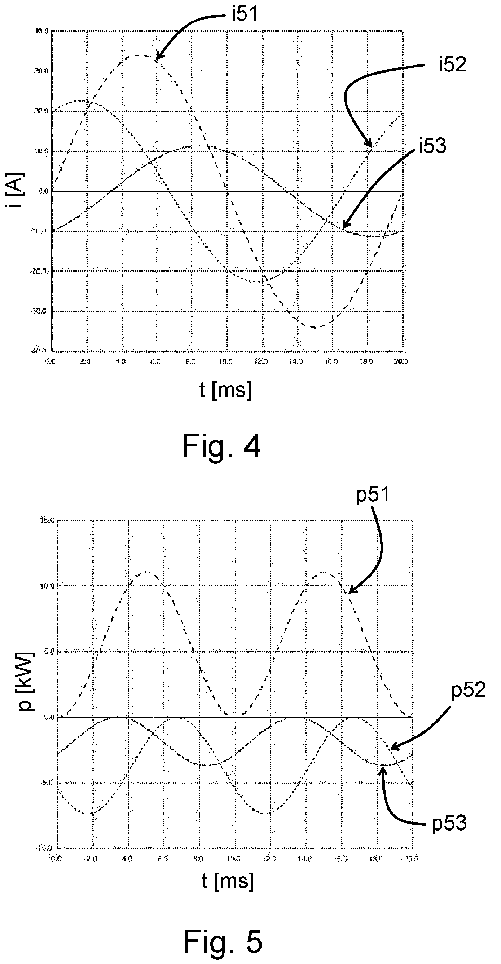

In Fig. 3 ist die Belastung der Phasenleiter L1, L2, L3 im Anschlusspunkt 6 der Ladeinfrastrukturanordnung dargestellt. Hierbei ist zu erkennen, dass die Lastströme i61, i62, i63 in den Phasenleitern L1, L2, L3 gleich groß und phasenverschoben sind. Zur Realisierung dieser gleichmäßigen Belastung im Drehstrom-Zuleitungssystem 7 prägt die Schieflastausgleichseinheit 5 die in dem Graph nach Fig. 4 dargestellten Ausgleichsströme i51, i52, i53 ein. Praktisch bedeutet dies, dass der am wenigsten belastete Phase (Phasenleiter L1) Energie entnommen und diese Energie auf die am höchsten belasteten Phasen (Phasenleiter L2, L3) verteilt wird. Die mittels der Leistungselektronik der Schieflastausgleichseinheit 5 eingespeisten beziehungsweise verschobenen Leistungen p51, p52, p53 sind in dem Graph nach Fig. 5 für die verschiedenen Phasenleiter L1, L2, L3 beziehungsweise die ihnen zugeordneten Anschlussleiter 16, 17, 18 dargestellt.

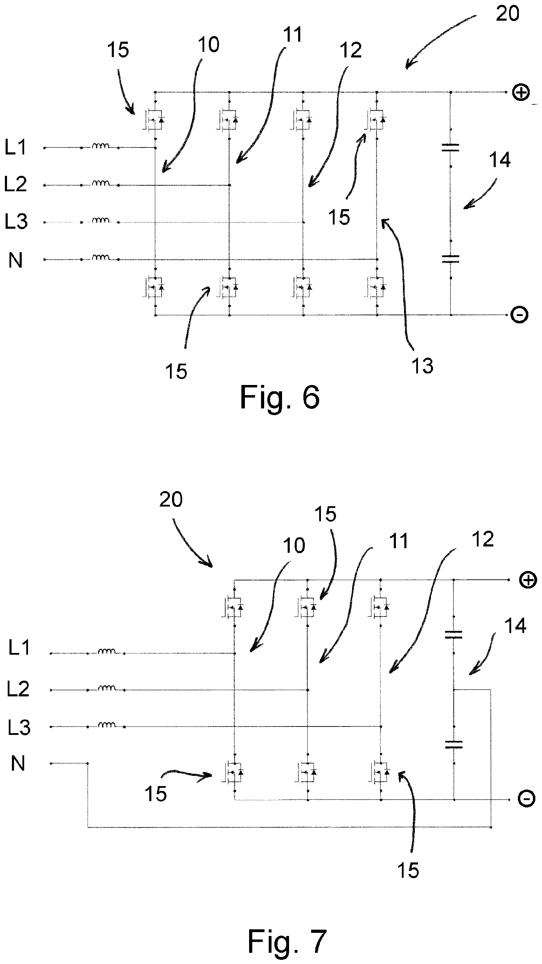

Drei alternative Ausführungsformen der Brückenschaltung 20 der Leistungselektronik sind in den Fig. 6 bis 8 wiedergegeben.

Nach einer ersten Ausführungsform gemäß Fig. 6 sieht die Brückenschaltung 20 je einen Brückenzweig 10, 11, 12 für die den Phasenleitern L1, L2, L3 zugeordneten Anschlussleiter 16, 17, 18 und einen weiteren Brückenzweig 13 für den dem Nullleiter N zugeordneten Anschlussleiter 19 der Schieflastausgleichseinheit 5 vor. Des Weiteren ist ein Zwischenkreis 14 mit einem Zwischenkreiskondensator umfasst. Die Anschlussleiter 16, 17, 18, 19 sind jeweils über eine Induktivität beziehungsweise eine Spule an die Phasenleiter L1, L2, L3 und den Nullleiter N des Drehstrom-Zuleitungssystems 7 angeschlossen.

Nach einer zweiten Ausführungsform umfasst die Brückenschaltung 20 für die den Phasenleitern L1, L2, L3 zugeordneten Anschlussleiter 16, 17, 18 die Brückenzweige 10, 11, 12, vgl. Fig. 7. Die den Phasenleitern L1, L2, L3 zugeordneten Anschlussleiter 16, 17, 18 sind jeweils über eine Induktivität beziehungsweise eine Spule an die Phasenleiter L1, L2, L3 des Drehstrom-Zuleitungssystems 7 angeschlossen. Darüber hinaus ist der dem Nullleiter N zugeordnete Anschlussleiter 19 an einen Mittelpunkt der Zwischenkreiskapazität des Zwischenkreises 14 zwischen zwei in Reihe geschalteten Kondensatoren beziehungsweise Kapazitäten von bevorzugt gleicher Größe angeschlossen.

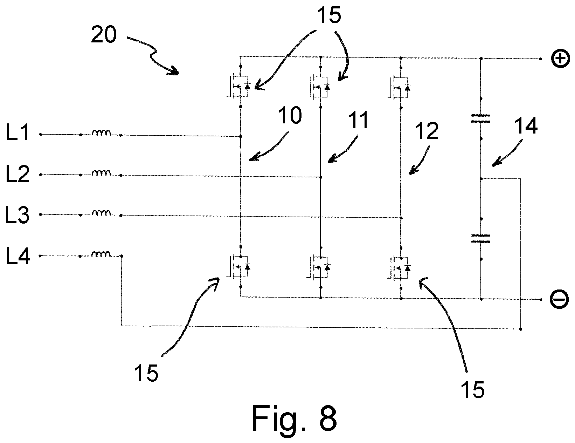

Eine dritte alternative Ausführungsform der Brückenschaltung nach Fig. 8 entspricht im Wesentlichen der Ausführungsform nach Fig. 7. Allerdings ist hier auch der dem Nullleiter N zugeordneten Anschlussleiter 19 über eine Induktivität beziehungsweise eine Spule an den Nullleiter N des Drehstrom-Zuleitungssystems 7 angeschlossen.

Jeweils sind den Brückenzweigen 10, 11, 12, 13 Schaltmittel 15 zum getakteten Betrieb der Anschlussleiter 16, 17, 18, 19 zugeordnet. Als Schaltmittel 15 finden Leistungshalbleiter, beispielsweise MOSFETs, IGBTs, Thyristoren, IGCTs oder GTOs Verwendung. Die Schaltmittel 15 werden über die Steuerung der Schieflastausgleichseinheit 5 betätigt beziehungsweise angesteuert.

Nach der Erfindung kann beispielsweise die Schieflastausgleichseinheit 5 als eigenständige physikalische Komponente realisiert und an das Drehstrom-Zuleitungssystem 7 angeschlossen sein. Beispielsweise können die Schieflastausgleichseinheit 5 und ein einzelner AC-Ladepunkt integriert realisiert sein. Beispielsweise kann eine Mehrzahl von Schieflastausgleichseinheiten 5 vorgesehen sein. Diese können beispielsweise integriert in die verschiedenen AC-Ladepunkte der Ladeinfrastrukturanordnung realisiert sein mit der Folge, dass die Aufprägung der Ausgleichsströme verteilt erfolgt. Beispielsweise kann die Ladeinfrastrukturanordnung Ladestationen mit mehr als einem AC-Ladepunkt vorsehen.

Die erfindungsgemäße Ladeinfrastrukturanordnung kann im Sinne einer Versorgungsinfrastrukturanordnung dazu ausgebildet sein, über das Bereitstellen von Ladeströmen für Elektrofahrzeuge hinaus an die Ladeinfrastrukturanordnung angeschlossene Elektrofahrzeuge im Rahmen eines übergeordneten Energiemanagements als Energiequelle zu nutzen und in den Fahrzeugen gespeicherte Energie bedarfsgerecht in das Versorgungsnetz einzuspeisen. Dies kann beispielsweise sinnvoll sein, um temporär Lastspitzen auszugleichen.

Während die erfindungsgemäße Ladeinfrastrukturanordnung wenigstens einen AC-Ladepunkt 1, 2, 3, 4 umfasst, können des Weiteren weitere Wechselstromlasten an das Drehstrom-Zuleitungssystem 7 angeschlossen sein und dieses symmetrisch oder unsymmetrisch belasten. Beispielsweise kann die erfindungsgemäße Ladeinfrastrukturanordnung eine DC-Ladeeinrichtung umfassen. Die Schieflastausgleichseinheit 5 kann ein Teil der DC-Ladeeinrichtung sein.

Ebenso exemplarisch ist in dem vorliegenden Ausführungsbeispiel der Erfindung die Belastung des Drehstrom-Zuleitungssystems 7 kumuliert über die gemessenen Lastströme jedes Phasenleiters L1, L2, L3 bestimmt, die durch die Summe der Lastbeziehungsweise Ladeströme i13, i22, i33, i42 der AC-Ladepunkte 1, 2, 3, 4 definiert ist. Alternativ könnte die Belastung über die kumulierte Leistung oder lokal über die Last- beziehungsweise Ladeströme i13, i22, i33, i42 oder die lokale Scheinleistung der einzelnen AC-Ladepunkte 1, 2, 3, 4 ermittelt werden.

Gleiche Bauteile und Bauteilfunktionen sind durch gleiche Bezugszeichen gekennzeichnet.

## Patentansprüche

1. Ladeinfrastrukturanordnung zum Laden von Elektrofahrzeugen umfassend
- einen Anschlusspunkt (6), der eingerichtet ist zum Anschluss der Ladeinfrastrukturanordnung an ein externes Versorgungsnetz (8),
- ein zu dem Anschlusspunkt (6) geführtes Drehstrom-Zuleitungssystem (7) mit drei Phasenleitern (L1, L2, L3) und einem Nullleiter (N),
- wenigstens einen AC-Ladepunkt (1, 2, 3, 4), der an wenigstens einen Phasenleiter (L1, L2, L3) des Drehstrom-Zuleitungssystems (7) und den Nullleiter (N) angeschlossen ist,
- eine Schieflastausgleichseinheit (5), die über Anschlussleiter (16, 17, 18, 19) an die Phasenleiter (L1, L2, L3) und den Nullleiter (N) des Drehstrom-Zuleitungssystems (7) angeschlossen ist,
wobei für den Anschlusspunkt (6) eine maximale Stromtragfähigkeit und/oder eine maximale Schieflast vorgegeben sind und wobei die Schieflastausgleichseinheit (5) eingerichtet ist zum Entgegennehmen einer Information über eine kumulierte Belastung jedes Phasenleiters (L1, L2, L3) des Drehstrom-Zuleitungssystems (7) durch die AC-Ladepunkte (1, 2, 3, 4) und/oder eine lokale Belastung des Drehstrom-Zuleitungssystems (7) durch einen Ladestrom (i13, i22, i33, i42) jedes AC-Ladepunkts (1, 2, 3, 4) und zum Einprägen eines Ausgleichsstroms (i51, i52, i53) zwischen den Phasenleitern (L1, L2, L3) des Drehstrom-Zuleitungssystems (7) derart, dass in dem Anschlusspunkt (6) die maximale Schieflast und/oder die maximale Stromtragfähigkeit nicht überschritten sind.

2. Ladeinfrastrukturanordnung nach Anspruch 1, **dadurch gekennzeichnet, dass** die Schieflastausgleichseinheit (5) eine Steuerung und Leistungselektronik mit einer Brückenschaltung (20) vorsieht, wobei die Brückenschaltung (20) einen Brückenzweig (10, 11, 12) je Anschlussleiter (16, 17, 18), der einem Phasenleiter (L1, L2, L3) des Drehstrom-Zuleitungssystems (7) zugeordnet ist, und einen Zwischenkreis (14) mit einer Zwischenkreiskapazität vorsieht.

3. Ladeinfrastrukturanordnung nach Anspruch 1 oder 2, **dadurch gekennzeichnet, dass** ein dem Nullleiter (N) zugeordneter Anschlussleiter (19) der Schieflastausgleichseinheit (5) an einen Mittelpunkt der Zwischenkreiskapazität angeschlossen ist.

4. Ladeinfrastrukturanordnung nach Anspruch 1 oder 2, **dadurch gekennzeichnet, dass** die Brückenschaltung (20) einen weiteren Brückenzweig (13) für einen dem Nullleiter (N) des Drehstrom-Zuleitungssystems (7) zugeordneten Anschlussleiter (19) vorsieht.

5. Ladeinfrastrukturanordnung nach einem der Ansprüche 1 bis 4, **dadurch gekennzeichnet, dass** Messmittel (9) vorgesehen sind zum Bestimmen der kumulierten Belastung der Phasenleiter (L1, L2, L3) und/oder dass die Messmittel (9) zwischen dem wenigstens einen AC-Ladepunkt (1, 2, 3, 4) einerseits und der Schieflastausgleichseinheit (5) andererseits vorgesehen sind.

6. Ladeinfrastrukturanordnung nach einem der Ansprüche 1 bis 5, **dadurch gekennzeichnet, dass** von dem AC-Ladepunkt (1, 2, 3, 4) eine Information zu der lokalen Belastung an jedem einzelnen AC-Ladepunkt (1, 2, 3, 4) an die Schieflastausgleichseinheit (5) übertragbar ist.

7. Ladeinfrastrukturanordnung nach einem der Ansprüche 1 bis 6, **dadurch gekennzeichnet, dass** die Information über lokale Belastungen an jedem AC-Ladepunkt (1, 2, 3, 4) und/oder die kumulierte Belastung des Drehstrom-Zuleitungssystems (7) durch die AC-Ladepunkte (1, 2, 3, 4) kabellos und/oder leitungsgebunden an die Schieflastausgleichseinheit (5) bereitgestellt sind.

8. Schieflastausgleichseinheit (5) für eine Ladeinfrastrukturanordnung mit einer Mehrzahl von Phasenleitern (L1, L2, L3) und einem Nullleiter (N), insbesondere für eine Ladeinfrastrukturanordnung nach einem der Ansprüche 1 bis 7, umfassend Mittel zum Entgegennehmen einer Information über einen lokale Belastung des Drehstrom-Zuleitungssystem (7) durch einen AC-Ladepunkt (1, 2, 3, 4) und/oder eine kumulierte Belastung jedes Phasenleiters (L1, L2, L3), umfassend zu den Phasenleitern (L1, L2, L3) und dem Nullleiter (N) der Ladeinfrastrukturanordnung geführte Anschlussleiter (16, 17, 18, 19), umfassend eine Steuerung und umfassend eine Leistungselektronik mit einer Brückenschaltung (20), wobei die Brückenschaltung (20) einen Brückenzweig (10, 11, 12) je Phasenleiter (L1, L2, L3) und einen Zwischenkreis (14) mit einer Zwischenkreiskapazität vorsieht und wobei die Leistungselektronik mit der Steuerung zusammenwirkt zum Einprägen eines Ausgleichsstroms (i51, i52, i53) zwischen den Phasenleitern (L1, L2, L3).

9. Schieflastausgleichseinheit (5) nach Anspruch 8, **dadurch gekennzeichnet, dass** ein dem Nullleiter (N) zugeordneter Anschlussleiter (19) an einen Mittelpunkt der Zwischenkreiskapazität angeschlossen ist.

10. Schieflastausgleichseinheit (5) nach Anspruch 8, **dadurch gekennzeichnet, dass** die Brückenschaltung (20) einen weiteren Brückenzweig (13) für einen dem Nullleiter (N) zugeordneten Anschlussleiter (19) aufweist.

11. Betriebsverfahren für eine Ladeinfrastrukturanordnung zum Laden von Elektrofahrzeugen, insbesondere für eine Ladeinfrastrukturanordnung nach einem der Ansprüche 1 bis 7, wobei die Ladeinfrastrukturanordnung einen Anschlusspunkt (6), ein zu dem Anschlusspunkt (6) geführtes Drehstrom-Zuleitungssystem (7) mit drei Phasenleitern (L1, L2, L3) und einem Nullleiter (N), wenigstens einen AC-Ladepunkt (1, 2, 3, 4) und eine Schieflastausgleichseinheit (5) vorsieht, umfassend die folgenden Schritte:
- die Schieflastausgleichseinheit (5) nimmt eine Information über eine kumulierte Belastung jedes Phasenleiter (L1, L2, L3) des Drehstrom-Zuleitungssystems (7) durch die AC-Ladepunkte (1, 2, 3, 4) und/oder eine lokale Belastung des Drehstrom-Zuleitungssystems (7) durch jeden AC-Ladepunkt (1, 2, 3, 4) entgegen,
- die Schieflastausgleichseinheit (5) bestimmt eine aus der kumulierten Belastung jedes Phasenleiter (L1, L2, L3) des Drehstrom-Zuleitungssystems (7) und/oder aus der lokalen Belastung des Drehstrom-Zuleitungssystems (7) durch jeden AC-Ladepunkt (1, 2, 3, 4) resultierende Schieflast,
- die Schieflastausgleichseinheit (5) prägt einen Ausgleichsstrom (i51, i52, i53) ein, der so bemessen ist, dass eine tatsächliche Schieflast im Anschlusspunkt (6) kleiner ist als eine für den Anschlusspunkt (6) definierte maximale Schieflast und/oder dass eine maximale Stromtragfähigkeit im Anschlusspunkt (6) nicht überschritten ist.

12. Betriebsverfahren nach Anspruch 11, **dadurch gekennzeichnet, dass** eine Ist-Schieflast im Anschlusspunkt (6) im Wesentlichen Null ist.

13. Betriebsverfahren nach Anspruch 11 oder 12, **dadurch gekennzeichnet, dass** die kumulierte Belastung jedes Phasenleiters (L1, L2, L3) gemessen und dann an die Schieflastausgleichseinheit (5) übertragen wird.

14. Betriebsverfahren nach einem der Ansprüche 11 bis 13, **dadurch gekennzeichnet, dass** die Information über die lokale Belastung an dem AC-Ladepunkt (1, 2, 3, 4) für jeden AC-Ladepunkt (1, 2, 3, 4) und/oder eine Information über einen mit dem Ladestrom (i13, i22, i33, i42) des AC-Ladepunkts (1, 2, 3, 4) belasteten Phasenleiter (L1, L2, L3) an die Schieflastausgleichseinheit (5) übertragen wird.
